# EUROPEAN PATENT SPECIFICATION

(11) **EP 3 686 302 B1**
(45) Date of publication and mention of the grant of the patent: **28.08.2024**
(21) Application number: 19872242.3
(22) Date of filing: 20.09.2019
(51) Int. Cl.: C22C 29/08, C22C 1/051, C22C 29/06, B22F 5/00

(54) **A CEMENTED CARBIDE AND METHOD OF MANUFACTURING A CEMENTED CARBIDE**
HARTMETALL UND VERFAHREN ZUR HERSTELLUNG EINES HARTMETALLS
CARBURE CÉMENTÉ ET PROCÉDÉ DE FABRICATION D'UN CARBURE CÉMENTÉ

(30) Priority: 01.11.2018 JP 2018206545
(43) Date of publication of application: 29.07.2020
(73) Proprietor: SUMITOMO ELECTRIC INDUSTRIES, LTD., Osaka-shi, Osaka 541-0041 (JP)
(72) Inventor: YAMANISHI, Takato, Osaka-shi, Osaka 541-0041 (JP); TSUDA, Keiichi, Osaka-shi, Osaka 541-0041 (JP)
(74) Representative: Boult Wade Tennant LLP
(86) International application number: PCT/JP2019/036928
(87) International publication number: WO 2020/090280

(56) References cited:
- EP-A1- 1 413 637
- EP-A1- 2 474 634
- EP-A2- 2 199 418
- AT-B- 385 775
- CN-A- 108 203 785
- JP-A- 2007 113 036
- JP-A- 2007 113 036
- JP-A- S6 169 941
- HALE THOMAS E.: "Sintering of Cemented Carbide", METALS HANDBOOK, 30 January 1993 (1993-01-30), Metals Park, Ohio, pages 1 - 897, XP093025952, ISBN: 978-0-87170-013-1, Retrieved from the Internet <URL:https://www.asminternational.org/search/-/journal_content/56/10192/23412238/PUBLICATION> [retrieved on 20230221]

## Description

### TECHNICAL FIELD

The present disclosure relates to a cemented carbide, a cutting tool, and a method of manufacturing a cemented carbide.

### BACKGROUND ART

As a base member of a cutting tool, cemented carbide is used for its high hardness. In recent years, cutting tools have been increasingly demanded to be capable of cutting difficult-to-cut materials such as heat-resistant alloys. While cutting such difficult-to-cut materials, cutting tool edges tend to have high temperature. This tends to cause a shortened tool life, which is a problem.

Mitigating this decrease in the tool life has been attempted. For example, PTL 1 (Japanese Patent Laying-Open No. 2014-208889) discloses a cemented carbide (sintered material) that includes a material having an excellent high-temperature resistance, such as an intermetallic compound including Al₂O₃ and/or Al. For example, PTL 2 (Japanese National Patent Publication No. 2013-544963) discloses that, in order to improve heat resistance of cemented carbide, it is effective to formulate Cr and Mo in the binder phase of the cemented carbide. EP2199418A2 relates to a rotary cutter knife. JP2007113036A relates to a cemented carbide. EP2474634A1 relates to a super hard alloy and cutting tool using same. EP1413637A1 relates to a cemented carbide with improved toughness for oil and gas applications. CN108203785A relates to an electrical discharge machining hard alloy plate of non-even structure and manufacturing method thereof. AT385775B relates to a corrosion-resistant hard metal alloy.

### CITATION LIST

### PATENT LITERATURE

PTL 1: Japanese Patent Laying-Open No. 2014-208889
PTL 2: Japanese National Patent Publication No. 2013-544963

### SUMMARY OF INVENTION

The scope of the present invention is defined by independent claims 1 and 6, and further embodiments of the invention are specified in dependent claims 2-5.

### BRIEF DESCRIPTION OF DRAWINGS

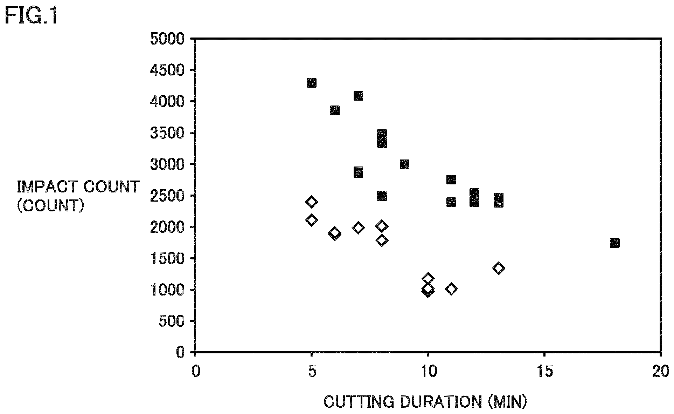

Fig. 1 is a graph showing results of tests of Reference Examples 11 and 12, inventive Examples 1-10 and 13-17 and Comparative Examples 1 to 12.

### DETAILED DESCRIPTION

### [Problem to be Solved by the Present Disclosure]

However, the intermetallic compound including Al₂O₃ and Al is a brittle substance. Therefore, with respect to a cemented carbide that includes the intermetallic compound including Al₂O₃ and Al, it is difficult to achieve both a high heat resistance and a high fracture resistance that are high enough to satisfy the market demand. In addition, adding Cr and Mo to cemented carbide is a difficult technique to apply to cutting tools. It is because, although the amounts of Cr and Mo to add to cemented carbide can be increased in an attempt to ensure a certain level of heat resistance required of a cutting tool, it is not enough to achieve a desired improvement in heat resistance and it even tends to end up decreasing hardness.

As described above, conventional techniques fall short of providing a cemented carbide having both a high heat resistance and a high fracture resistance. An object of the present disclosure is to provide a cemented carbide and a cutting tool having both a high heat resistance and a high fracture resistance, and a method of manufacturing the cemented carbide.

### [Advantageous Effect of the Present Invention]

The present invention provides a cemented carbide and a cutting tool having both a high heat resistance and a high fracture resistance.

### [Description of Embodiments]

First, a description will be given of aspects of the present invention.

A cemented carbide according to the present invention is according to claim 1.

The cemented carbide has ratio M1/M4 of not less than 15% and not more than 50%, and therefore the Co content (mass%) of the binder phase is suitable. With this configuration, the sinterability of the cemented carbide is increased and thereby fracture resistance of the cemented carbide can be improved. In addition, the cemented carbide also has ratio M2/M3 of not less than 15% and not more than 40%, and therefore the total content (mass%) of Cr and Mo in the binder phase is suitable. With this configuration, the cemented carbide can have an improved heat resistance. In the context of the total content of Cr and Mo, the Mo content may be 0 mass%.

In contrast, when M1/M4 is lower than 15%, the Co content (mass%) is insufficient and therefore fracture resistance of the cemented carbide is decreased; and when M1/M4 exceeds 50%, the ratio of M2 is relatively decreased and thereby heat resistance is decreased. When M2/M3 is lower than 15%, the total content (mass%) of Cr and Mo is insufficient and therefore heat resistance of the cemented carbide is decreased; and when M2/M3 exceeds 40%, at least one of Cr and Mo cannot sufficiently form solid solution with Ni and Co and they remain in the cemented carbide in the form of carbide and/or intermetallic compound, thereby causing a decrease in heat resistance and a decrease in fracture resistance.

Moreover, the cemented carbide according to the present invention also has a ratio of an area of Cr/Mo-rich particles being lower than 1%. The Cr/Mo-rich particles are particles including at least one of Cr and Mo in a high ratio (details will be described below). Hereinafter, compounds constituting the Cr/Mo-rich particles are collectively called "Cr/Mo compound".

In the cemented carbide, Cr and Mo can be present as metal and can also be present as Cr/Mo compound. When present as metal in the cemented carbide, Cr and Mo can contribute to improving heat resistance of the cemented carbide; whereas, when present as Cr/Mo compound, Cr and Mo cannot contribute to the improving. The Cr/Mo compound even causes a decrease in fracture toughness of the cemented carbide. It is because the Cr/Mo compound is a brittle substance itself.

The expression "present as metal" means that the subject forms alloy with other metallic elements in the cemented carbide. Examples of these other metallic elements that form alloy with Cr and Mo include Co and Ni.

The cemented carbide according to the present invention has a ratio of an area of Cr/Mo-rich particles composed of Cr/Mo compound being lower than 1%, and therefore the ratio of the at least one of Cr and Mo present as Cr/Mo compound is sufficiently low and most of the at least one of Cr and Mo is present as metal. Because of this, in this cemented carbide, a decrease in heat resistance and a decrease in fracture toughness due to Cr/Mo-rich particles can be sufficiently mitigated.

Therefore, the cemented carbide according to an aspect of the present disclosure can have both a high heat resistance and a high fracture resistance that are high enough to satisfy the market demand.

In the present invention, the cemented carbide optionally includes a second hard phase, the second hard phase consisting of a carbide, wherein the carbide is at least one selected from TiC, NbC, TaC, TaNbC, and TiNbC. With this configuration, oxidation resistance, reaction resistance, and the like are excellent.

Preferably, the compound constituting the second hard phase has an average particle size not less than 0.1 µm and not more than 5 µm. With this configuration, the second hard phase can have a sufficiently high hardness. When the average particle size of the compound exceeds 5.0 µm, the structure of the second hard phase is sparse and a sufficient hardness may not be maintained.

A cutting tool according to an aspect of the present disclosure comprises a base member consisting of the cemented carbide. Comprising the cemented carbide as a base member, the cutting tool can have both a high heat resistance and a high fracture resistance and thereby can have an excellent cutting life.

The cutting tool preferably comprises a coating film on at least part of a surface of the base member. With this configuration, the cutting tool can also exhibit properties attributable to the coating film.

A method of manufacturing a cemented carbide according to an aspect of the present invention is according to claim 6.

In the manufacturing method according to an aspect of the present disclosure, a powder including at least one of NiCr powder and NiCrMo powder is used as a raw material powder of a binder phase. If Cr or Mo is used in the form of a single metallic element, namely in the form of Cr powder or Mo powder, or if Cr or Mo is used in carbide form, namely in the form of Cr₃C₂ powder or Mo₂C powder, Cr/Mo compound is deposited noticeably.

In this regard, in the manufacturing method according to an aspect of the present disclosure, Cr and Mo is used in alloy form such as NiCr and NiCrMo. NiCr and NiCrMo have a high energy (reaction energy) required for reaction with carbon and/or other elements. Because of this, the Cr and Mo is less likely to form Cr/Mo compound in the sintering step and can be present in alloy form in the cemented carbide. Therefore, the Cr and Mo added in alloy form can contribute to improving heat resistance of the cemented carbide, which is the final product.

NiCr and NiCrMo tend to have a poor sinterability. For this reason, using these alloy powders as the only raw material powder ends up decreasing sinterability of the cemented carbide and thereby cannot give a sufficient fracture resistance. In this regard, in the manufacturing method according to an aspect of the present disclosure, these alloy powders are used with Co powder. Co powder has a low liquid-phase-emerging temperature during sintering compared to the alloy powder. Therefore, Co can become wet with WC before NiCr and NiCrMo do, and, consequently, the sinterability of the cemented carbide is maintained high. In other words, the manufacturing method according to an aspect of the present invention makes it possible to mitigate a decrease in sinterability due to alloy powder.

Therefore, the method of manufacturing a cemented carbide makes it possible to manufacture a cemented carbide that can achieve both a high heat resistance and a high fracture resistance that are high enough to satisfy the market demand.

### [Detailed Description of Embodiments]

In the following, a description will be given of an embodiment of the present disclosure (hereinafter called "the present embodiment"). It should be noted that the embodiments of the present disclosure is for the explanation of the present disclosure, and not for the limitation of the present invention. The scope of the present invention is defined in the appended claims. The expression "A to B" herein means the upper limit and the lower limit to a range (more specifically, not less than A and not more than B). When A is not accompanied by unit expression and only B is accompanied by unit expression, the unit for A is the same as the unit for B. Any chemical formula herein such as "TaC" and "NbC" without specified atomic ratio is considered that the atomic ratio between the elements is not necessarily "1" but it includes all the conventionally known atomic ratios.

### <Method of manufacturing cemented carbide>

First, to help understanding the cemented carbide according to the present embodiment, a description will be given of the method of manufacturing the cemented carbide. The cemented carbide according to the present embodiment can be manufactured by the steps described below.

### <<Step of preparing powder mixture>>

This step involves mixing a raw material powder of a first hard phase and a raw material powder of a binder phase to prepare a powder mixture. When it is desired to manufacture a cemented carbide further comprising a second hard phase, a raw material powder of the second hard phase may be further mixed. The average particle size of each powder excluding the average particle size of the WC powder may be any size within the range of 0.1 to 50 µm. In the present invention, the average particle size of the WC powder ranges from 1.1 to 1.5 µm. In the context of the present specification, the average particle size of each powder is calculated by the Fisher method.

### (Raw material powder of first hard phase)

The raw material powder of the first hard phase is WC powder. In a reference example, the average particle size of WC powder ranges from 0.1 to 10 µm. With this configuration, the first hard phase of the cemented carbide (the final product) can have a sufficiently high hardness and thereby the cemented carbide can have an increased hardness. When the average particle size of WC powder exceeds 10 µm, the structure of the first hard phase is sparse and a sufficient hardness may not be maintained. In the present invention, the average particle size of WC powder is from 1.1 to 1.5 µm.

### (Raw material powder of binder phase)

The raw material powder of the binder phase includes Co powder and an alloy powder. The alloy powder is at least one of NiCr powder and NiCrMo powder. In order to control the elemental ratio of the binder phase, Ni powder may be further mixed in the raw material powder of the binder phase.

When the raw material powder of the binder phase includes Mo, in other words, when NiCrMo powder is used as a raw material powder of the binder phase, the Cr content (mass%) of the NiCrMo alloy is preferably equal to or more than the Mo content (mass%) of the alloy. When the Cr content is less than the Mo content, oxidation resistance of the binder phase is decreased and consequently the cutting life of the cemented carbide may be decreased.

### (Raw material powder of second hard phase)

In the present invention, the cemented carbide optionally includes a second hard phase, the second hard phase consisting of a carbide wheren the carbide is at least one selected from TiC, NbC, TaC, TaNbC, and TiNbC. These carbides are excellent in oxidation resistance and reaction resistance. When manufacturing a cemented carbide comprising a second hard phase consisting of TiC and NbC, for example, a powder mixture consisting of TiC powder and NbC powder is used as the raw material powder of the second hard phase.

Preferably, the average particle size of the raw material powder of the second hard phase ranges from 0.1 to 5 µm. With this configuration, the second hard phase of the cemented carbide (the final product) can have a sufficiently high hardness and thereby the cemented carbide can have an increased hardness. When the average particle size of the raw material powder of the second hard phase exceeds 5 µm, the structure of the second hard phase is sparse and a sufficient hardness may not be maintained. The average particle size of the raw material powder of the second hard phase is more preferably from 0.3 to 1 µm, further preferably from 0.5 to 0.8 µm.

### (Method of mixing raw material powders)

Then, the raw material powders thus prepared are mixed. The method of mixing is not particularly limited, and the raw material powders may be mixed with an attritor, a ball mill, a bead mill, a jet mill, a mortar, and/or the like. The mixing duration varies depending on the type of the apparatus used for mixing, and the mixing duration may be any duration within the range of 0.1 to 48 hours. From the viewpoint of producing a homogeneous powder mixture with high efficiency, the mixing duration is preferably from 2 to 15 hours.

### (Formulation ratio between raw material powders)

In the present invention, the formulation ratio between WC powder, the raw material powder of the binder phase, and the raw material powder of the second hard phase is adjusted to the ratios described below.
WC powder: 30 to 95 mass%
Raw material powder of binder phase: 1 to 15 mass%
Raw material powder of second hard phase: 0 to 65 mass%

With the above formulation, when the cemented carbide is used in a cutting tool, hardness and denseness required as functions of a cutting tool can be sufficiently ensured. Preferably, the formulation ratio between the raw material powders is WC powder by 80 to 95 mass%, the raw material powder of the binder phase by 1 to 15 mass%, and the raw material powder of the second hard phase by 0 to 15 mass%. With this configuration, the hardness and the toughness of the cemented carbide can be maintained even in a better balance.

In the present invention, in the context of the raw material powder of the binder phase, the Co content (mass%) is expressed as M 1, the total content (mass%) of Cr and Mo is expressed as M2, the total content (mass%) of Ni, Cr, and Mo is expressed as M3, and the total content (mass%) of Co, Ni, Cr, and Mo is expressed as M4, all relative to 100 mass% of the total of the raw material powder of the binder phase, ratio M1/M4 is from 15 to 50% and ratio M2/M3 is from 15 to 40%. Therefore, in the context of the raw material powder of the binder phase, the ratio of each of Co powder, Ni powder, Cr powder, and Mo powder (100 mass%) to the total amount of these are adjusted to the ratios described below:
Co powder: 15 to 50 mass%
Ni powder: 30 to 70 mass%
Cr powder and Mo powder (combined): 7.5 to 20 mass%

The average particle size of the raw material powder of the first hard phase is substantially the same as the average particle size of WC particles constituting the first hard phase of the cemented carbide. Similarly, the average particle size of the raw material powder of the second hard phase is substantially the same as the average particle size of the particles constituting the second hard phase of the cemented carbide. Therefore, adjusting the average particle size of the raw material powder of each type makes it possible to manufacture a cemented carbide having a desired average particle size.

### <<Step of preparing shaped body>>

This step involves compression shaping the powder mixture to prepare a shaped body. The method of compression shaping is not particularly limited, and any method generally employed for compression shaping of sintered material may be employed. For instance, by placing the powder mixture in a hard-alloy mold such as a Ta capsule and then pressing it, a shaped body can be obtained. The pressing pressure ranges from 10 MPa to 16 GPa. For example, the pressing pressure is 100 MPa.

### <<Step of preparing cemented carbide>>

This step involves sintering the shaped body to produce a cemented carbide. Preferably, the sintering is performed over a sufficient period of time after a liquid phase of the binder phase emerges. The maximum temperature of the sintering preferably ranges from 1400 to 1600°C. The duration to keep at the maximum temperature preferably ranges from 0.5 to 2 hours. The gas partial pressure at the maximum temperature preferably ranges from 0.1 to 10 kPa. The cooling rate from the maximum temperature to room temperature ranges from 2 to 50°C/min. The atmosphere during sintering is preferably vacuum, argon atmosphere, nitrogen atmosphere, or hydrogen atmosphere.

### <<Functions and effects>>

The method of manufacturing a cemented carbide according to the present embodiment described above is characterized in that Co powder as well as an alloy powder such as NiCr powder and NiCrMo powder are used as raw material powder of the binder phase. With this configuration, it is possible to manufacture a cemented carbide having both a high heat resistance and a high fracture resistance, which was impossible to manufacture with the use of powder consisting of single element Cr and/or single element Mo or with the use of powder of carbide consisting of these elements and carbon.

In the following, in order to make clear why the excellent cemented carbide mentioned above can be manufactured by using the alloy powder, a description will be given of a manufacturing procedure where Co powder, Ni powder, and Cr powder are used as the raw material powder of the binder phase.

In the above case, the shaped body to be sintered includes WC powder, Co powder, Ni powder, and Cr powder. In the context of this shaped body, Co, Ni, and Cr are added in order for them to be present as metal in the binder phase. Element Cr, in particular, is expected to be present as metal in the binder phase to thereby improve heat resistance.

While the shaped body is sintered, however, Cr can be present not only as metal but also as carbide or intermetallic compound in the cemented carbide. It is because Cr element is stable both in the form of carbide and in the form of intermetallic compound. For instance, when the carbon content of the cemented carbide is high, Cr tends to be present as carbide (such as Cr₃C₂); whereas when the carbon content of the cemented carbide is low, Cr tends to be present as intermetallic compound (such as Ni₃Cr). The carbon of the carbide is C in the raw material of the first hard phase and is also C in the medium used for mixing, a carbon jig used in sintering, and/or the like.

Therefore, it is difficult to make a sufficient amount of Cr be present in metal form in the binder phase, and, for this reason, a desired heat resistance expected to be achieved by Cr addition cannot be achieved. Furthermore, Cr carbide and Cr intermetallic compound are both brittle substances and, therefore, the presence thereof decreases fracture toughness of the cemented carbide and causes a decrease in fracture resistance. In other words, when Co powder, Ni powder, and Cr powder are used as the raw material powder of the binder phase, a desired heat resistance is not exhibited and a sufficient fracture resistance is not obtained.

The same applies to when Mo powder is included in the raw material powder of the binder phase. More specifically, although Mo element is also expected to be present as metal in the binder phase to thereby improve heat resistance, Mo tends to be deposited as carbide (such as Mo₂C) or intermetallic compound in the cemented carbide. In particular, when both Cr and Mo elements are added, deposition of the carbide and the intermetallic compound increases as the total content of Cr and Mo increases.

As described above, when at least one of Cr powder and Mo powder is used in an attempt to make at least one of Cr and Mo be present as metal in the binder phase, at least one of Cr and Mo ends up being present as Cr/Mo compound in the cemented carbide and thereby it does not contribute to improving heat resistance and it even causes a decrease in fracture resistance. The same phenomenon occurs when Cr carbide powder (such as Cr₃C₂) and Mo carbide powder (such as Mo₂C) are used.

In this regard, in the manufacturing method according to the present embodiment, Cr and Mo is present as alloy powder consisting of an alloy of these elements with Ni (NiCr or NiCrMo) in the shaped body. These alloy powders have a high reaction energy compared to Cr powder, Mo powder, and Cr or Mo carbide powder. Therefore, these alloys are less likely to change into Cr/Mo compound during sintering and thereby these alloys can be present as metal in the cemented carbide.

However, using the alloy powder alone leads to an insufficient fracture toughness of the cemented carbide and a decreased fracture resistance of the cemented carbide. It is because the alloy powder has a poor sinterability. In order to mitigate such outcomes, the manufacturing method according to the present embodiment uses Co powder, together with the alloy powder, in a suitable amount. With this, a decrease in sinterability due to the alloy powder can be mitigated. This is because the alloy has a high liquid-phase-emerging temperature compared to Co; and thereby Co, which has an excellent wettability with WC, can first become wet with WC in the sintering step; and thereby the sinterability of the cemented carbide is improved.

It should be noted that PTL 2 discloses a technique involving adding at least one of Cr and Mo to produce a cemented carbide that consists of a first hard phase consisting of WC and a binder phase including Ni in an attempt to improve heat resistance; however, the resulting cemented carbide cannot be used in cutting tool applications. It is because the sinterability of Ni is markedly low compared to that of Co.

### <Cemented carbide>

The cemented carbide according to the present invention is according to claim 1.

### <<First hard phase>>

The cemented carbide according to the present invention includes a first hard phase consisting of WC. The ratio of the first hard phase in the cemented carbide ranges from 30 to 95 mass%. With this configuration, hardness required as functions of a cutting tool can be sufficiently ensured. Preferably, the ratio of the first hard phase in the cemented carbide ranges from 80 to 95 mass%. With this configuration, the hardness and the toughness of the cemented carbide can be maintained even in a better balance.

In a reference example, the average particle size of WC constituting the first hard phase is not particularly limited, and is preferably from 0.1 to 10 µm. With this configuration, the first hard phase can have a sufficiently high hardness. When the average particle size of WC exceeds 10 µm, the structure of the first hard phase is sparse and a sufficient hardness may not be maintained. In the present invention, average particle size of WC is from 1.1 to 1.5 µm.

The ratio of the first hard phase in the cemented carbide may be determined by ICP (Inductively Coupled Plasma) emission spectrochemical analysis, for example. More specifically, the cemented carbide is pulverized, the content ratio of each element in the pulverized product is determined by ICP emission spectrochemical analysis, the resultant is used to calculate the composition ratio of each component, and thereby the WC ratio is determined. In the same way, the content ratio of each of the binder phase and the second hard phase described below and the content ratio of each of Co, Ni, Cr, and Mo elements are determined.

### <<Binder phase>>

The cemented carbide according to the present invention further includes a binder phase. The binder phase is composed of either three elements which are Co, Ni and Cr or four elements which are Co, Ni, Cr and Mo. In a reference example, thehe ratio of the binder phase in the cemented carbide ranges from 1 to 30 mass%. With this configuration, fracture resistance required as functions of a cutting tool can be sufficiently ensured and heat resistance attributable to elements in the binder phase can be sufficiently exhibited. In the present invention, the ratio of the binder phase in the cemented carbide ranges from 1 to 15 mass%. With this configuration, the fracture resistance and the heat resistance can be maintained even in a better balance.

### < < Second hard phase>>

In the present invention, the cemented carbide optionally includes a second hard phase, the second hard phase consisting of a carbide wheren the carbide is at least one selected from TiC, NbC, TaC, TaNbC, and TiNbC. With this configuration, oxidation resistance, reaction resistance, and the like are excellent.

Preferably, the average particle size of the compound constituting the second hard phase ranges from 0.1 to 5 µm. With this configuration, the second hard phase can have a sufficiently high hardness. When the average particle size of the compound exceeds 5.0 µm, the structure of the second hard phase is sparse and a sufficient hardness may not be maintained. The average particle size of the compound is more preferably from 0.3 to 1 µm, further preferably from 0.5 to 0.8 µm.

### <<Ratio M1/M4>>

The cemented carbide according to the present invention has a ratio M1/M4 from 15 to 50%. When ratio M1/M4 is from 15 to 50%, the Co content (mass) of the binder phase is suitable and both fracture resistance and heat resistance of the cemented carbide are excellent. When ratio M1/M4 is lower than 15%, the low Co content (mass%) causes a decrease in sinterability of the cemented carbide and thereby a sufficient fracture resistance is not obtained. When ratio M1/M4 exceeds 50%, the total content (mass%) of Cr and Mo responsible for improving heat resistance is relatively low and thereby a sufficient heat resistance is not obtained.

### <<Ratio M2/M3>>

The cemented carbide according to the present invention has a ratio M2/M3 from 15 to 40%. With this, the total content (mass%) of Cr and Mo elements (which exhibit heat resistance) is suitable and thereby the cemented carbide can have a high heat resistance. When ratio M2/M3 is lower than 15%, the total content (mass%) of Cr and Mo is insufficient and a sufficient heat resistance is not obtained. When ratio M2/M3 exceeds 40%, at least one of Cr and Mo cannot sufficiently form solid solution with Ni and deposits as Cr/Mo compound (brittle substance) in the cemented carbide. This causes a decrease in heat resistance and a decrease in fracture resistance.

M1 to M4 are in mass%, and are determined by ICP emission spectrochemical analysis as described above. When a coating film and/or the like is provided on a surface of the cemented carbide, it is preferable that the coating film be removed by grinding before ICP emission spectrochemical analysis.

### <<Cr/Mo-rich particles>>

Cr/Mo-rich particles are particles including at least one of Cr and Mo in a high ratio. In the present invention, Cr/Mo-rich particles are particles constituting a region where a concentration of at least one of Cr and Mo (atom%) is higher than ratio M2/M4 in the entire cemented carbide [the ratio of M2 (total content of Cr and Mo in the cemented carbide) to M4 (total content of Co, Ni, Cr, and Mo in the cemented carbide)] (mass%) in cross sectional elemental mapping of the cemented carbide.

The ratio of an area of Cr/Mo-rich particles in the entire area of the cemented carbide according to the present invention is lower than 1%. The ratio of an area of Cr/Mo-rich particles is determined in the following way.

First, an arbitrary cross section of the cemented carbide is prepared. The cross section may be prepared by using a focused ion beam apparatus, a cross section polisher apparatus, and/or the like. Then, an SEM (Scanning Electron Microscope) is used to capture electronic images (10 fields of view) of the cross section at a 5000-fold magnification. It is followed by elemental mapping of a predetermined region (12 µm × 9 µm) of each electronic image with the use of EPMA (Electron Probe MicroAnalysis), EDX (Energy Dispersive X-ray spectrometry), or EDS (Energy Dispersive Spectrometer) attached to the SEM.

In the resulting elemental mapping, a region including WC is defined as first hard phase; a region including no WC and including either three elements which are Co, Ni and Cr or four elements which are Co, Ni, Cr and Mo is defined as binder phase; and a region including no WC and including the above-described compound constituting the second hard phase is defined as second hard phase. Depending on the sintering conditions, there may further be pores present in addition to the first hard phase, the binder phase, and the second hard phase.

Then, from the elemental mapping, regions with a higher concentration (%) of at least one of Cr and Mo detected compared to other regions are extracted. Point analysis is performed near the center of the area of each region thus extracted, so that the total percentage content (%) of Cr and Mo in the region is calculated and defined as "concentration of at least one of Cr and Mo". With respect to a region where the concentration (%) of at least one of Cr and Mo is higher than ratio M2/M4 (%) in the entire cemented carbide calculated based on ICP emission spectrochemical analysis, the particles constituting the region are regarded as Cr/Mo-rich particles.

With respect to these Cr/Mo-rich particles, the ratio of an area of Cr/Mo-rich particles in the entire area of the cemented carbide is calculated with image analysis software ("Mac-View I" manufactured by Mountech Co., Ltd.) or the like. This ratio of the area refers to the ratio of an area of Cr/Mo-rich particles to the total area of a single arbitrary field of view captured with an SEM in the cross section of the cemented carbide, and is calculated as the average of the captured 10 fields of view. The ratio calculated for the cemented carbide according to the present invention is lower than 1%.

Examples of the Cr/Mo-rich particles include particles consisting of at least one of Cr carbide, Mo carbide, Cr-including intermetallic compound, and Mo-including intermetallic compound. Examples of the Cr carbide include Cr₃C₂, Cr₇C₃, and Cr₂3C₆. Examples of the Mo carbide include Mo₂C. Examples of the Cr-including intermetallic compound include Co₃Cr and Ni₃Cr. Examples of the Mo-including intermetallic compound include Mo₃Co₃C and Ni₃Mo.

### < <Functions and effects>>

A cemented carbide according to the present invention is according to claim 1, said cemented carbide comprises Characteristics 1 to 3 described below, and thereby can have both a high heat resistance and a high fracture resistance.
Characteristic 1: ratio M1/M4 from 15 to 50%
Characteristic 2: ratio M2/M4 from 15 to 40%
Characteristic 3: ratio of an area of Cr/Mo-rich particles in the entire area of the cemented carbide of lower than 1%

In contrast to this, when the cemented carbide has Characteristics 1 and 2 but does not have Characteristic 3, for instance, many of Cr and Mo in the cemented carbide are present as Cr/Mo compound, in other words, they form Cr/Mo-rich particles. As a result, this cemented carbide not only does not have an improved heat resistance that could be achieved by Cr and Mo present as metal but also has a decreased fracture resistance due to the Cr/Mo compound.

When the cemented carbide has Characteristic 3 but does not have either or both Characteristic 1 and Characteristic 2, for instance, at least one of a decrease in heat resistance and a decrease in fracture resistance occurs due to lack of either or both Characteristic 1 and Characteristic 2. With respect to Characteristic 3, the lower limit is 0%.

In the cemented carbide according to the present embodiment, the Cr content (mass%) is preferably equal to or more than the Mo content (mass%). When the Cr content (mass%) is lower than the Mo content (mass%), oxidation resistance of the binder phase is decreased and thereby the cutting life of the cemented carbide may be decreased.

In the present invention, the cemented carbide optionally includes a second hard phase, the second hard phase consisting of a carbide wheren the carbide is at least one selected from TiC, NbC, TaC, TaNbC, and TiNbC. It is because the properties of the second hard phase can also be exhibited. With this configuration, the second hard phase can improve oxidation resistance, reaction resistance, and the like of the cemented carbide.

### <Cutting tool>

A cutting tool according to the present embodiment comprises a base member consisting of the cemented carbide. Moreover, the cutting tool according to the present embodiment may have a coating film on at least part of a surface of the base member.

The shape and the applications of the cutting tool according to the present embodiment are not particularly limited. Examples include a drill, an end mill, an indexable cutting insert for a drill, an indexable cutting insert for an end mill, an indexable cutting insert for milling, an indexable cutting insert for turning, a metal-slitting saw, a gear cutting tool, a reamer, a tap, and an insert for crankshaft pin milling.

The cutting tool according to the present embodiment thus comprises as a base member a cemented carbide having both a high heat resistance and a high fracture resistance, and, therefore, may be particularly suitable for use as a cutting tool for cutting a difficult-to-cut material where the cutting tool edges tend to have high temperature during cutting. With the configuration in which the cutting tool comprises a coating film, a high wear resistance attributable to the coating film can be obtained.

### [Examples]

In the following, the present disclosure will be described in more detail by way of examples. However, the scope of the present disclosure is not limited to them.

### <Reference Examples 11 and 12, inventive Examples 1-10 and 13-17 and Comparative Examples 1 to 12>

### <<Production of cemented carbide>>

Referring to columns under "Raw material powder" in Table 1, as a raw material powder of the first hard phase, WC powder having the average particle size specified in "D50 (µm)" under "First hard phase" was prepared; as a raw material powder of the second hard phase, a compound powder having the composition specified in "Composition" and the average particle size specified in "D50 (µm)", both under "Second hard phase", was prepared; and as a raw material powder of the binder phase, the powders specified in "Powder type" under "Binder phase" were mixed so that each element satisfied "Formulation ratio (mass%)".

The raw material powder of the first hard phase, the raw material powder of the second hard phase, and the raw material powder of the binder phase thus prepared were mixed in the ratio specified in column "Formulation ratio between raw material powders", followed by processing with an attritor for 12 hours. Thus, a powder mixture was prepared.

Then, the powder mixture thus prepared was placed in a Ta capsule, followed by pressing with a press machine at a pressure of 100 MPa. Thus, a shaped body was prepared. Then, the resulting shaped body was sintered under the following sintering conditions and thereby a cemented carbide was produced.
Maximum temperature: 1450°C
Gas partial pressure: 0.5 kPa in Ar atmosphere
Duration to keep: 0.5 hours
Cooling rate: 20°C/min.

### < <Production of cutting tool> >

The cemented carbide thus produced was surface-polished to produce an SNG432-shaped throw-away insert (cutting tool).

### < <Evaluation of properties>>

### (Calculation of ratio M1/M4 (%) and ratio M2/M3 (%))

Ratio M1/M4 (%) and ratio M2/M3 (%) of the cemented carbide are shown in columns "Ratio M1/M4 (%)" and "Ratio M2/M3 (%)" under "Evaluation of properties" in Table 1. The values were calculated from the mixing ratio of the powders in the raw material powder of the binder phase. The inventors of the present invention checked that these calculated values substantially agreed with the values determined by ICP emission spectrochemical analysis of the cemented carbide.

### (Ratio of area of Cr/Mo-rich particles)

A cross section of the cemented carbide thus produced was prepared with a focused ion beam apparatus, and then subjected to elemental mapping with an SEM-EDX by the above-described method. In the above-described way, Cr/Mo-rich particles were identified. With respect to the region with Cr/Mo particles thus identified, the ratio of an area in the image occupied by the region was calculated by the above-mentioned image analysis software. The same procedure was performed on images (10 fields of view) of the cemented carbide, and the average was entered in column "Cr/Mo-Rich particle ratio (%)" in Table 1.

### (Test to evaluate fracture resistance)

By using a cutting tool thus produced with the cemented carbide, tests 1 and 2 involving turning were carried out. Cutting conditions in these tests are shown below. In test 1, the longer the cutting duration is, the more excellent the high-temperature wear resistance is, namely, the more excellent the heat resistance is. In test 2, the greater the impact count is, the more excellent the fracture toughness is, namely, the more excellent the fracture resistance is. Results of these tests are shown in Table 1.

Fig. 1 is a graph having the results of test 1 on the abscissa and the results of test 2 on the ordinate. In Fig. 1, the black square plots are for the results of Examples 1 to 17 and the open rhombic plots are for the results of Comparative Examples 1 to 12.

### (Cutting conditions in test 1)

Workpiece: Inconel (registered trademark) 718
Cutting velocity (Vc): 75 m/minute
Feed rate (f): 0.3 mm/rev.
Cutting environment: WET
Evaluation method: Cutting duration to achieve flank wear amount of 0.2 mm (minute)

### (Cutting conditions in test 2)

Workpiece: SCM435 grooved material (groove count: 4)
Cutting velocity (Vc): 100 m/minute
Feed rate (f): 0.4 mm/rev.
Cutting environment: DRY
Evaluation method: Average value of impact count (n = 4) to cause cutting edges fracture

**[Table 1] *Reference Examples.**

| | Raw material powder | | | | | | | | | Formulation ratio between raw material powders | | | Evaluation of properties | | | | |
|---|---|---|---|---|---|---|---|---|---|---|---|---|---|---|---|---|---|
| | First hard phase | | Second hard phase | | Binder phase | | | | | First hard phase (mass%) | Second hard phase (mass%) | Binder phase (mass%) | Ratio M1/M4 (%) | Ratio M2/M3 (%) | Cr/Mo-Rich particle ratio (%) | Test 1 | Test 2 |
| | | | | | | | | | | | | | | | | Cutting duration (min) | Impact count (count) |
| | Composition | D50 (µm) | Composition | D50 (µm) | Powder type | Formulation ratio (mass%) | | | | | | | | | | | |
| | | | | | | Co | Ni | **Cr** | **Mo** | | | | | | | | |
| Ex.1 | WC | 1.20 | - | - | Co, NiCr | 50 | 40 | **10** | **0** | 94 | 0 | 6 | 50 | 20 | 0.0 | 13 | 2412 |
| Ex.2 | WC | 1.18 | - | - | Co, NiCr | 50 | 30 | **20** | **0** | 94 | 0 | 6 | 50 | 40 | 0.6 | 12 | 2532 |
| Ex.3 | WC | 1.18 | - | - | Co, NiCrMo | 50 | 35 | **10** | **5** | 94 | 0 | 6 | 50 | 30 | 0.4 | 11 | 2763 |
| Ex.4 | WC | 1.21 | - | - | Co, NiCrMo | 50 | 35 | **5** | **10** | 94 | 0 | 6 | 50 | 30 | 0.5 | 8 | 2498 |
| Ex.5 | WC | 1.21 | - | - | Co, NiCrMo | 50 | 30 | **10** | **10** | 94 | 0 | 6 | 50 | 40 | 0.9 | 12 | 2549 |
| Ex.6 | WC | 1.20 | - | - | Co, NiCr | 50 | 42.5 | **7.5** | **0** | 94 | 0 | 6 | 50 | 15 | 0.0 | 11 | 2404 |
| Ex.7 | WC | 1.20 | - | - | Co, NiCr | 15 | 68 | **17** | **0** | 94 | 0 | 6 | 15 | 20 | 0.4 | 13 | 2476 |
| Ex.8 | WC | 1.24 | - | - | Co, NiCr | 30 | 56 | **14** | **0** | 94 | 0 | 6 | 30 | 20 | 0.3 | 12 | 2399 |
| Ex.9 | WC | 1.15 | - | - | Co, NiCr | 50 | 40 | **10** | **0** | 90 | 0 | 10 | 50 | 20 | 0.0 | 6 | 3871 |
| Ex.10 | WC | 1.28 | - | - | Co, NiCrMo | 50 | 35 | **10** | **5** | 90 | 0 | 10 | 50 | 30 | 0.3 | 7 | 4093 |
| Ex.11 | WC | 0.31 | - | - | Co, NiCr | 50 | 40 | **10** | **0** | 94 | 0 | 6 | 50 | 20 | 0.0 | 18 | 1756 |
| Ex.12 | WC | 4.12 | - | - | Co, NiCr | 50 | 40 | **10** | **0** | 94 | 0 | 6 | 50 | 20 | 0.0 | 5 | 4302 |
| Ex.13 | WC | 1.12 | TaC | 0.58 | Co, NiCr | 50 | 40 | **10** | **0** | 89 | 2 | 9 | 50 | 20 | 0.0 | 7 | 2897 |
| Ex.14 | WC | 1.43 | NbC | 0.77 | Co, NiCr | 50 | 40 | **10** | **0** | 89 | 2 | 9 | 50 | 20 | 0.0 | 9 | 3012 |
| Ex.15 | WC | 1.23 | TiC | 0.64 | Co, NiCr | 50 | 40 | **10** | **0** | 89 | 2 | 9 | 50 | 20 | 0.0 | 8 | 3339 |
| Ex.16 | WC | 1.22 | TaC | 0.63 | Co, NiCr | 50 | 40 | **10** | **0** | 81 | 10 | 9 | 50 | 20 | 0.0 | 8 | 3471 |
| Ex.17 | WC | 1.12 | TiC | 1.35 | Co, NiCr | 50 | 40 | **10** | **0** | 61 | 30 | 9 | 50 | 20 | 0.0 | 7 | 2871 |
| Comp. Ex. 1 | WC | 1.25 | - | - | Co | 100 | 0 | **0** | **0** | 94 | 0 | 6 | 100 | 0 | 0.0 | 5 | 2398 |
| Comp. Ex. 2 | WC | 1.19 | - | - | Ni, NiCr | 0 | 80 | **20** | **0** | 94 | 0 | 6 | 0 | 20 | 0.4 | 11 | 1023 |
| Comp. Ex. 3 | WC | 1.34 | - | - | Ni, NiCrMo | 0 | 70 | **20** | **10** | 94 | 0 | 6 | 0 | 30 | 0.6 | 10 | 983 |
| Comp. Ex. 4 | WC | 1.20 | - | - | Co, Ni, Cr | 50 | 40 | **10** | **0** | 94 | 0 | 6 | 50 | 20 | 1.2 | 6 | 1879 |
| Comp. Ex. 5 | WC | 1.54 | - | - | Co, Ni, Cr₃C₂ | 50 | 40 | **10** | **0** | 94 | 0 | 6 | 50 | 20 | 3.8 | 7 | 1987 |
| Comp. Ex. 6 | WC | 1.30 | - | - | Co, Ni, Cr, Mo | 50 | 35 | **10** | **5** | 94 | 0 | 6 | 50 | 30 | 4.3 | 6 | 1902 |
| Comp. Ex. 7 | WC | 1.21 | - | - | Co, Ni, Cr, Mo₂C | 50 | 35 | **10** | **5** | 94 | 0 | 6 | 50 | 30 | 4.4 | 8 | 1786 |
| Comp. Ex. 8 | WC | 1.22 | - | - | Co, NiCr | 60 | 30 | **10** | **0** | 94 | 0 | 6 | 60 | 25 | 0.7 | 8 | 2014 |
| Comp. Ex. 9 | WC | 1.18 | - | - | Co, NiCr | 50 | 25 | **25** | **0** | 94 | 0 | 6 | 50 | 50 | 1.3 | 10 | 1024 |
| Comp. Ex. 10 | WC | 1.19 | - | - | Co, Ni, NiCr | 50 | 45 | **5** | **0** | 94 | 0 | 6 | 50 | 10 | 0.0 | 5 | 2112 |
| Comp. Ex. 11 | WC | 1.22 | - | - | Co, Ni, NiCrMo | 50 | 25 | **15** | **10** | 94 | 0 | 6 | 50 | 50 | 1.8 | 10 | 1184 |
| Comp. Ex. 12 | WC | 1.19 | - | - | Co, NiCr | 12 | 64 | **16** | **0** | 94 | 0 | 6 | 12 | 20 | 0.7 | 13 | 1349 |

Referring to Fig. 1 and Table 1, the cemented carbides of Examples 1 to 17 have all of Characteristic 1 to 3 described above. Results of tests 1 and 2 show that these cemented carbides have both a high heat resistance and a high fracture resistance. Comparison between Examples 3 to 5 shows that when the Cr content (mass%) is equal to or more than the Mo content (mass%), these properties are in even more excellent balance.

Comparison between Examples 1, 11, 12 (Examples 11 and 12 are reference examples) shows that when the average particle size of WC ranges from 0.5 to 3 µm, heat resistance and fracture resistance are in excellent balance. The cemented carbides of Examples 13 to 17 include a second hard phase in addition to a first hard phase and a binder phase. Comparison between these shows that when the average particle size of particles constituting the second hard phase ranges from 0.3 to 1.0 µm, these properties are in excellent balance.

In contrast, referring to Comparative Examples 1 to 3, it is shown that when the binder phase consists of Co alone or when the binder phase does not include Co, a high heat resistance and a high fracture resistance are not obtained at the same time. In Comparative Examples 4 to 7 which do not satisfy (3) above, heat resistance is low. The reason is considered that Cr powder, Mo powder, Cr carbide powder, or Mo carbide powder is used as a raw material of the binder phase and thereby many of at least one of Cr and Mo is present as Cr/Mo compound. In Comparative Examples 8, 12 which do not satisfy (1) above, one of heat resistance and fracture resistance is significantly decreased. Also in Comparative Examples 9 to 11 which do not satisfy (2) above, one of heat resistance and fracture resistance is significantly decreased.

It should be construed that embodiments disclosed herein are given by way of illustration in all respects, not by way of limitation. It is intended that the scope of the present invention is defined by claims.

## Claims

1. A cemented carbide consisting of a first hard phase, a binder phase and optionally a second hard phase,
the first hard phase consisting of WC,
the binder phase being composed of either three elements which are Co, Ni and Cr or four elements which are Co, Ni, Cr and Mo,
the second hard phase consisting of a carbide wherein the carbide is at least one selected from TiC, NbC, TaC, TaNbC, and TiNbC,
when a Co content of the cemented carbide is represented as M1, a total content of Cr and Mo in the cemented carbide is represented as M2, a total content of Ni, Cr, and Mo in the cemented carbide is represented as M3, and a total content of Co, Ni, Cr, and Mo in the cemented carbide is represented as M4,
a ratio of M1 to M4 being not less than 15% and not more than 50%,
a ratio of Ni content to M4 being 30 to 70%,
a ratio of M2 to M3 being not less than 15% and not more than 40%,
a ratio of M2 to M4 being 7.5 to 20%,
a ratio of an area of Cr/Mo-rich particles in an entire area of the cemented carbide being lower than 1%,
wherein the Cr/Mo-rich particles are particles constituting a region where a concentration of at least one of Cr and Mo is higher than the ratio of M2 to M4 in cross sectional elemental mapping of the cemented carbide,
the ratio of the area of Cr/Mo-rich particles is measured by the measuring method described in the description,
a formulation ratio of WC is 30 to 95 mass%,
the average particle size of WC ranges from 1.1 to 1.5 µm, and the average particle size is D50 measured by the Fisher method,
a formulation ratio of the binder phase is 1 to 15 mass%, and
a formulation ratio of the second hard phase is 0 to 65 mass%.

2. The cemented carbide according to claim 1, wherein the formulation ratio of the binder phase is 1 to 15 mass%, the formulation ratio of WC is 80 to 95 mass%, and the formulation ratio of the second hard phase is 0 to 15 mass%.

3. The cemented carbide according to claim 1 or claim 2, wherein the compound constituting the second hard phase has an average particle size not less than 0.1 µm and not more than 5 µm, and
the average particle size is D50 measured by the Fisher method.

4. A cutting tool comprising a base member consisting of the cemented carbide according to any one of claims 1 to 3.

5. The cutting tool according to claim 4 comprising a coating film on at least part of a surface of the base member.

6. A method of manufacturing a cemented carbide, comprising:
mixing a raw material powder of a first hard phase, a raw material powder of a binder phase and optionally a raw material powder of a second hard phase to prepare a powder mixture;
compression shaping the powder mixture to prepare a shaped body; and
sintering the shaped body to produce a cemented carbide, wherein the cooling rate from the maximum temperature to room temperature ranges from 2 to 50°C/min,
the raw material powder of a first hard phase consisting of WC powder,
the raw material powder of a binder phase including Co powder and an alloy powder,
the alloy powder being at least one of an alloy powder consisting of Ni and Cr and an alloy powder consisting of Ni, Cr, and Mo,
the raw material powder of a second hard phase consisting of a carbide wherein the carbide is at least one selected from TiC, NbC, TaC, TaNbC, and TiNbC,
when a Co content of the raw material powder of a binder phase is represented as M1, a total content of Cr and Mo in the raw material powder of a binder phase is represented as M2, a total content of Ni, Cr, and Mo in the raw material powder of a binder phase is represented as M3, and a total content of Co, Ni, Cr, and Mo in the raw material powder of a binder phase is represented as M4,
a ratio of M1 to M4 being not less than 15% and not more than 50%,
a ratio of a Ni content to M4 being 30 to 70%,
a ratio of M2 to M3 being not less than 15% and not more than 40%,
a ratio of M2 to M4 being 7.5 to 20%,
a ratio of an area of Cr/Mo-rich particles in an entire area of the cemented carbide being lower than 1%,
wherein the Cr/Mo-rich particles are particles constituting a region where a concentration of at least one of Cr and Mo is higher than the ratio of M2 to M4 in cross sectional elemental mapping of the cemented carbide,
the ratio of the area of Cr/Mo-rich particles is measured by the measuring method described in the description,
a formulation ratio of WC is 30 to 95 mass%,
the average particle size of WC powder ranges from 1.1 to 1.5 µm, and the average particle size is D50 measured by the Fisher method,
a formulation ratio of the raw material of a binder phase is 1 to 15 mass%, and
a formulation ratio of the raw material of a second hard phase is 0 to 65 mass%.

## Patentansprüche

1. Hartmetall, bestehend aus einer ersten Hartphase, einer Bindemittelphase und optional einer zweiten Hartphase,
wobei die erste Hartphase aus WC besteht,
wobei sich die Bindemittelphase entweder aus drei Elementen, nämlich Co, Ni und Cr oder aus vier Elementen, nämlich Co, Ni, Cr und Mo zusammensetzt,
die zweite Hartphase aus einem Karbid besteht, wobei das Karbid wenigstens aus TiC, NbC, TaC, TaNbC oder TiNbC ausgewählt ist, wobei,
wenn ein Co Gehalt des Hartmetalls als M1, ein Gesamtgehalt von Cr und Mo in dem Hartmetall als M2, ein Gesamtgehalt von Ni, Cr und Mo in dem Hartmetall als M3 und ein Gesamtgehalt von Co, Ni, Cr und Mo in dem Hartmetall als M4 dargestellt ist,
ein Verhältnis von M1 zu M4 nicht weniger als 15% und nicht mehr als 50% beträgt,
ein Verhältnis des Ni Gehalts zu M4 30 bis 70 % beträgt,
ein Verhältnis von M2 zu M3 nicht weniger 15 % und nicht mehr als 40 % beträgt,
ein Verhältnis von M2 zu M4 von 7,5 bis 20 % beträgt,
ein Verhältnis der Fläche der Cr/Mo reichen Partikel in der Gesamtfläche des Hartmetalls weniger als 1 % beträgt,
wobei die Cr/Mo reichen Partikel Partikel sind, die einen Bereich bilden, in dem die Konzentration von wenigstens Cr oder Mo höher ist als das Verhältnis von M2 zu M4 in der Querschnitts-Elementarzuordnung des Hartmetalls,
das Verhältnis der Fläche der Cr/Mo reichen Partikel durch das in der Beschreibung beschriebene Messverfahren gemessen wird,
ein Formulierungsverhältnis von WC 30 bis 95 Masse-% beträgt,
die durchschnittliche Partikelgröße von WC von 1,1 bis 1,5 µm reicht und die durchschnittliche Partikelgröße D50 ist, gemessen nach dem Fisher-Verfahren,
ein Formulierungsverhältnis der Bindemittelphase 1 bis 15 Masse-% beträgt und
ein Formulierungsverhältnis der zweiten Hartphase 0 bis 65 Masse-% beträgt.

2. Hartmetall nach Anspruch 1, wobei das Formulierungsverhältnis der Bindemittelphase 1 bis 15 Masse-%, das Formulierungsverhältnis von WC 80 bis 95 Masse-% und das Formulierungsverhältnis der zweiten Hartphase 0 bis 15 Masse-% beträgt.

3. Hartmetall nach Anspruch 1 oder Anspruch 2, wobei die Zusammensetzung, die die zweite Hartphase bildet, eine durchschnittliche Partikelgröße von nicht weniger als 0,1 µm und nicht mehr als 5 µm hat und
die durchschnittliche Partikelgröße D50 ist, gemessen nach dem Fisher-Verfahren.

4. Schneidwerkzeug mit einem Basiselement, bestehend aus dem Hartmetall nach einem der Ansprüche 1 bis 3.

5. Schneidwerkzeug nach Anspruch 4 mit einem Beschichtungsfilm auf wenigstens einem Teil einer Oberfläche des Basiselements.

6. Verfahren zur Herstellung eines Hartmetalls, das umfasst:
Mischen eines Rohmaterialpulvers einer ersten Hartphase, eines Rohmaterialpulvers einer Bindemittelphase und optional eines Rohmaterialpulvers einer zweiten Hartphase, um ein Pulvergemisch herzustellen;
Druckformung des Pulvergemisches, um einen Formkörper herzustellen; und
Sintern des Formkörpers, um ein Hartmetall herzustellen, wobei die Abkühlungsrate von der Maximaltemperatur auf Raumtemperatur von 2 bis 50°C/min reicht,
wobei das Rohmaterialpulver einer ersten Hartphase aus WC Pulver besteht,
das Rohmaterialpulver einer Bindemittelphase Co Pulver und ein Legierungspulver aufweist,
das Legierungspulver wenigstens ein Legierungspulver, das aus Ni und Cr besteht, oder ein Legierungspulver ist, das aus Ni, Cr und Mo besteht,
das Rohmaterialpulver einer zweiten Hartphase aus einem Karbid besteht, wobei das Karbid wenigstens aus TiC, NbC, TaC, TaNbC oder TiNbC ausgewählt ist, wobei,
wenn ein Co Gehalt des Rohmaterialpulvers einer Bindemittelphase als M1, ein Gesamtgehalt von Cr und Mo in dem Rohmaterialpulver als M2, ein Gesamtgehalt von Ni, Cr und Mo in dem Rohmaterialpulver als M3 und ein Gesamtgehalt von Co, Ni, Cr und Mo in dem Rohmaterialpulver einer Bindemittelphase als M4 dargestellt ist,
ein Verhältnis von M1 zu M4 nicht weniger als 15% und nicht mehr als 50% beträgt,
ein Verhältnis des Ni Gehalts zu M4 30 bis 70 % beträgt,
ein Verhältnis von M2 zu M3 nicht weniger als 15 % und nicht mehr 40 % beträgt,
ein Verhältnis von M2 zu M4 7,5 bis 20 % beträgt,
ein Verhältnis einer Fläche von Cr/Mo reichen Partikeln in einer Gesamtfläche des Hartmetalls weniger als 1 % beträgt,
wobei die Cr/Mo reichen Partikel Partikel sind, die einen Bereich bilden, in dem die Konzentration von wenigstens Cr oder Mo höher ist als das Verhältnis von M2 zu M4 in der Querschnitts-Elementarzuordnung des Hartmetalls,
das Verhältnis der Fläche der Cr/Mo reichen Partikel durch das in der Beschreibung beschriebene Messverfahren gemessen wird,
das Formulierungsverhältnis von WC 30 bis 95 Masse-% beträgt,
die durchschnittliche Partikelgröße von WC Pulver von 1,1 bis 1,5 µm reicht und die durchschnittliche Partikelgröße D50 ist, gemessen nach dem Fisher-Verfahren,
ein Formulierungsverhältnis des Rohmaterials einer Bindemittelphase 1 bis 15 Masse-% beträgt und
ein Formulierungsverhältnis des Rohmaterials einer zweiten Hartphase 0 bis 65 Masse-% beträgt.

## Revendications

1. Carbure cémenté constitué d'une première phase dure, d'une phase de liant et facultativement d'une deuxième phase dure,
la première phase dure étant constituée de WC,
la phase de liant étant composée soit de trois éléments qui sont Co, Ni et Cr, soit de quatre éléments qui sont Co, Ni, Cr et Mo,
la deuxième phase dure étant constituée d'un carbure dans lequel le carbure est au moins l'un sélectionné parmi TiC, NbC, TaC, TaNbC et TiNbC,
lorsqu'une teneur en Co du carbure cémenté est représentée par M1, une teneur totale en Cr et Mo dans le carbure cémenté est représentée par M2, une teneur totale en Ni, Cr et Mo dans le carbure cémenté est représentée par M3, et une teneur totale en Co, Ni, Cr et Mo dans le carbure cémenté est représentée par M4,
un rapport de M1 sur M4 n'étant pas inférieur à 15 % et pas supérieur à 50 %,
un rapport de la teneur en Ni sur M4 étant de 30 à 70 %,
un rapport de M2 sur M3 n'étant pas inférieur à 15 % et pas supérieur à 40 %,
un rapport de M2 sur M4 étant de 7,5 à 20 %,
un rapport d'une aire de particules riches en Cr/Mo dans une aire totale du carbure cémenté étant inférieur à 1 %,
dans lequel les particules riches en Cr/Mo sont des particules constituant une région où une concentration d'au moins l'un parmi Cr et Mo est supérieure au rapport de M2 sur M4 en cartographie élémentaire en section transversale du carbure cémenté,
le rapport de l'aire de particules riches en Cr/Mo est mesuré par le procédé de mesure décrit dans la description,
un rapport de formulation de WC est de 30 à 95 % en masse,
la granulométrie moyenne de WC varie de 1,1 à 1,5 µm, et la granulométrie moyenne est D50 mesurée par le procédé de Fisher,
un rapport de formulation de la phase de liant est de 1 à 15 % en masse, et
un rapport de formulation de la deuxième phase dure est de 0 à 65 % en masse.

2. Carbure cémenté selon la revendication 1, dans lequel le rapport de formulation de la phase de liant est de 1 à 15 % en masse, le rapport de formulation de WC est de 80 à 95 % en masse, et le rapport de formulation de la deuxième phase dure est de 0 à 15 % en masse.

3. Carbure cémenté selon la revendication 1 ou la revendication 2, dans lequel le composé constituant la deuxième phase dure possède une granulométrie moyenne qui n'est pas inférieure à 0,1 µm et pas supérieure à 5 µm, et
la granulométrie moyenne est D50 mesurée par le procédé de Fisher.

4. Outil de coupe comprenant un organe de base constitué du carbure cémenté selon l'une quelconque des revendications 1 à 3.

5. Outil de coupe selon la revendication 4 comprenant un film de revêtement sur au moins une partie d'une surface de l'organe de base.

6. Procédé de fabrication d'un carbure cémenté, comprenant :
le mélange d'une poudre de matière première d'une première phase dure, d'une poudre de matière première d'une phase de liant et facultativement d'une poudre de matière première d'une deuxième phase dure pour préparer un mélange de poudres ;
le formage par compression du mélange de poudres pour préparer un corps mis en forme ; et
le frittage du corps mis en forme pour produire un carbure cémenté, dans lequel la vitesse de refroidissement de la température maximale à la température ambiante varie de 2 à 50 °C/min,
la poudre de matière première d'une première phase dure étant constituée de poudre de WC,
la poudre de matière première d'une phase de liant incluant de la poudre de Co et une poudre d'alliage,
la poudre d'alliage étant au moins l'une parmi une poudre d'alliage constituée de Ni et Cr et une poudre d'alliage constituée de Ni, Cr et Mo,
la poudre de matière première d'une deuxième phase dure étant constituée d'un carbure dans lequel le carbure est au moins l'un sélectionné parmi TiC, NbC, TaC, TaNbC et TiNbC,
dans lequel une teneur en Co de la poudre de matière première d'une phase de liant est représentée par M1, une teneur totale en Cr et Mo dans la poudre de matière première d'une phase de liant est représentée par M2, une teneur totale en Ni, Cr et Mo dans la poudre de matière première d'une phase de liant est représentée par M3, et une teneur totale en Co, Ni, Cr et Mo dans la poudre de matière première d'une phase de liant est représentée par M4,
un rapport de M1 sur M4 n'étant pas inférieur à 15 % et pas supérieur à 50 %,
un rapport d'une teneur en Ni sur M4 étant de 30 à 70 %,
un rapport de M2 sur M3 n'étant pas inférieur à 15 % et pas supérieur à 40 %,
un rapport de M2 sur M4 étant de 7,5 à 20 %,
un rapport d'une aire de particules riches en Cr/Mo dans une aire totale du carbure cémenté étant inférieur à 1 %,
dans lequel les particules riches en Cr/Mo sont des particules constituant une région où une concentration d'au moins l'un parmi Cr et Mo est supérieure au rapport de M2 sur M4 en cartographie élémentaire en section transversale du carbure cémenté,
le rapport de l'aire de particules riches en Cr/Mo est mesuré par le procédé de mesure décrit dans la description,
un rapport de formulation de WC est de 30 à 95 % en masse,
la granulométrie moyenne de la poudre de WC varie de 1,1 à 1,5 µm, et la granulométrie moyenne est D50 mesurée par le procédé de Fisher,
un rapport de formulation de la matière première d'une phase de liant est de 1 à 15 % en masse, et
un rapport de formulation de la matière première d'une deuxième phase dure est de 0 à 65 % en masse.
